# EUROPEAN PATENT APPLICATION

(11) **EP 2 878 358 A1**
(43) Date of publication of application: **03.06.2015**
(21) Application number: 13195222.8
(22) Date of filing: 02.12.2013
(51) Int. Cl.: B01D 53/86, C01B 17/04, D01F 13/02

(54) **Catalytic oxidation of a gas comprising hydrogen sulfide**

(71) Applicant: HALDOR TOPSOE A/S, 2800 Kgs. Lyngby (DK)
(72) Inventor: THELLEFSEN, Morten, DK-3400 Hillerød (DK)
(74) Representative: Haldor Topsøe A/S

(57) **Abstract**

The present invention in a broad form relates to a process for oxidation of a gas comprising at least 0.05 vol% hydrogen sulfide and at least 0.05 vol% of the sum of carbon monoxide, carbonyl sulfide and carbon disulfide, comprising the steps of
(a) directing said gas to contact, at a first temperature, a first material catalytically active in oxidation of hydrogen sulfide at said first temperature, providing a heated and partially oxidized gas, and
(b) directing said partially oxidized gas to contact, at a second higher temperature, a second material catalytically active in oxidation of carbon monoxide, carbon disulfide and/or carbonyl sulfide providing an incinerated gas characterized in said first material being catalytically active in the oxidation of hydrogen sulfide at said first temperature, said second material being catalytically inactive in the oxidation of carbon monoxide and/or carbonyl sulfide at said first temperature and said second material being catalytically active in the oxidation of carbon monoxide and/or carbonyl sulfide at said second temperature with the associated benefit of reducing the requirements for inlet temperature as well as reducing the catalyst cost by reducing the required volume of expensive material catalytically active in oxidation of carbon monoxide and carbonyl sulfide, typically comprising noble metal.

## Description

The invention relates to catalytic oxidation of gases comprising H₂S and at least one of CO, COS and CS₂, in which the concentration of H₂S is at least 0.05 vol% and the sum of concentrations of CO, COS and CS₂ gases is at least 0.05 vol%. Such lean gases could e.g. be a waste stream from the production of viscose fibers or other viscose products. H₂S, CO, COS and CS₂ gases are toxic and must be treated before emitted to the atmosphere. A commonly used method is to oxidize these species to SO₂, CO₂ and H₂O and subsequently remove the SO₂ from the gas.

The SO₂ can be removed by conversion into sulfuric acid by catalytic conversion of SO₂ to SO₃, reaction with water vapor and condensation of the sulfuric acid vapor, but also SO₂ scrubbing methods can be used, e.g. reaction with lime to form gypsum or reaction with sodium hydroxide to form sodium sulfite/sulfate.

The conversion of H₂S and CS₂ in the lean gas into SO₂ can be by thermal oxidation at temperatures around 850 - 1000 °C. Due to the low calorific value of the lean gas, thermal oxidation requires heating the lean gas, typically by combustion of significant amounts of support fuel, which increases the cost of the process.

Catalytic oxidation of H₂S and CS₂ can proceed at much lower temperature and is thus much more economic for lean H₂S and COS+CS₂ gases.

According to the prior art, H₂S, CO, COS and CS₂ are catalytically oxidized on a noble metal promoted catalyst; the expensive noble metal, platinum, is usually the active component of the catalyst, e.g. in combination with copper and manganese oxide on a carrier such as silica.

However, according to the present disclosure, a catalyst system is disclosed, in which a sequential process results in a lower required gas temperature and a reduced amount of noble metal promoted catalyst. This catalyst system employs the fact that the exothermal oxidation of H₂S is initiated a temperatures as low as 200°C on a metal oxide oxidation catalyst, and that the oxidation of H₂S (and partial oxidation of CS₂ to COS/CO) increases the temperature to at least 320°C, which is required for oxidation of CS₂,COS and CO on a catalyst promoted with palladium, Pd.

In the present application the term "a material being catalytically active" e.g. in the oxidation of hydrogen sulfide at a given temperature, shall be understood as a material, in the presence of which the reaction rate of the mentioned reaction (here oxidation of hydrogen sulfide) is increased by at least an order of magnitude, preferably 2 orders of magnitude, and even more preferably 5 orders of magnitude when compared to the gas phase reaction.

Similarly in the present application the term "a material being substantially catalytically inactive" e.g. in the oxidation of carbon monoxide at a given temperature shall be understood as a material, in the presence of which the reaction rate of the mentioned reaction (here the oxidation of carbon monoxide) is not similarly increased compared to the gas phase reaction.

Where concentrations are stated in % (or v/v %) this shall be understood as volumetric %. Concentration of a specific constituent may for brevity be symbolized by c_{CO} i.e. with the chemical formula of that constituent as subscript.

A lean gas (such as a lean H₂S gas or a lean viscose off gas) shall be understood as a gas having a concentration of H₂S and CS₂ below the lower explosion limit, which corresponds to less than 1.25% CS₂ and less than 4.3% H₂S.

A metal oxide oxidation catalyst shall be understood as a catalyst comprising a metal oxide catalytically active in oxidation.

The present invention in a broad form relates to a process for oxidation of a gas comprising at least 0.05 vol% hydrogen sulfide and at least 0.05 vol% of the sum of carbon monoxide, carbonyl sulfide and carbon disulfide, comprising the steps of
(a) directing said gas to contact, at a first temperature, a first material catalytically active in oxidation of hydrogen sulfide at said first temperature, providing a heated and partially oxidized gas, and
(b) directing said partially oxidized gas to contact, at a second higher temperature, a second material catalytically active in oxidation of carbon monoxide, carbon disulfide and/or carbonyl sulfide providing an incinerated gas characterized in said first material being catalytically active in the oxidation of hydrogen sulfide at said first temperature, said second material being catalytically inactive in the oxidation of carbon monoxide and/or carbonyl sulfide at said first temperature and said second material being catalytically active in the oxidation of carbon monoxide and/or carbonyl sulfide at said second temperature with the associated benefit of reducing the requirements for inlet temperature as well as reducing the catalyst cost by reducing the required volume of expensive material catalytically active in oxidation of carbon monoxide and carbonyl sulfide, typically comprising noble metal.

In a further embodiment said first temperature is between 200 and 320°C, and preferably between 220 and 300°C, with the associated effect of this temperature being suitable for ignition of materials such as H₂S over an appropriate first catalytically active material.

In a further embodiment said second temperature is between 320 and 380°C preferably between 330 and 360°C with the associated effect of this temperature being suitable for ignition of materials such as CO and COS over an appropriate second catalytically active material.

In a further embodiment the amount of hydrogen sulfide is sufficient for raising the temperature to said second temperature by the heat developed from the oxidation of hydrogen sulfide with the associated benefit of reducing the amount of energy provided by support firing.

In a further embodiment said first catalytically active material comprises one or more oxides of a metal taken from the group consisting of vanadium, chromium, tungsten, molybdenum, cerium, niobium, manganese and copper, on an support comprising one or more oxides of metals taken from the group of aluminum, silicon and titanium with the associated benefit of said materials being effective in the catalytic oxidation of hydrogen sulfide at low temperatures.

In a further embodiment said second catalytically active material comprises a platinum group metal, preferably palladium, in combination with one or more oxides of a metal taken from the group consisting of vanadium, chromium, tungsten, molybdenum, cerium, niobium, manganese and copper, on an support comprising one or more oxides of metals taken from the group of aluminum, silicon and titanium with the associated benefit of said materials being active in the catalytic oxidation of carbon monoxide and/or carbonyl sulfide.

In a further embodiment one or both of said first and second catalytically active material is provided as a monolith structure with the associated benefit of providing an active catalyst with low pressure drop.

In a further embodiment the total concentration of H₂S is less than 2.5 vol% with the associated benefit of ensuring that the oxidation catalyst temperature remains below the deactivation temperature of about 550°C, at which catalytically active material may become physically unstable.

In a further embodiment the concentration condition c_{CS2} + 0.5 c_{COS} + 0.25 c_{CO} < 0.7 vol% is satisfied with the associated benefit of ensuring that the catalytically active material temperature remains below the deactivation temperature of about 550°C.

A further aspect of the invention relates to a process for production of sulfuric acid comprising the further steps of
(c) directing said incinerated gas to contact a material catalytically active in oxidation of sulfur dioxide to sulfur trioxide providing an oxidized gas and
(d) at least partially hydrating sulfur trioxide forming sulfuric acid,
(e) withdrawing from said oxidized gas sulfuric acid.
   with the associated benefit of providing a process for production of sulfuric acid from lean waste gases, which is cost and energy efficient.

In a further embodiment the process comprises the step of condensing sulfuric acid in a cooled condenser with the associated benefit of providing a process for production of sulfuric acid, which is efficient.

In a further embodiment the process comprises the step of absorbing sulfur trioxide in sulfuric acid with the associated benefit of providing a process for production of sulfuric acid, which is efficient.

A further aspect of the invention relates to a process plant configured for directing a gas to a catalyst system, characterized in said catalyst system comprising a material catalytically active in oxidation of hydrogen sulfide but substantially catalytically inactive in oxidation of carbonyl sulfide and carbon monoxide and a further material catalytically active in oxidation of carbonyl sulfide and carbon monoxide at a second higher temperature with the associated benefit of said process plant providing an economically beneficial catalyst configuration.

In a further embodiment one or both of said first catalytically active materials comprises one or more oxides of a metal taken from the group consisting of vanadium, chromium, tungsten, molybdenum, cerium, niobium, manganese and copper on a support comprising one or more oxides of metals taken from the group of aluminum, silicon and titanium with the associated benefit of said materials being effective in the catalytic oxidation of hydrogen sulfide at low temperatures.

In a further embodiment said second catalytically active material comprises a platinum group metal, preferably palladium in combination with one or more oxides of a metal taken from the group consisting of vanadium, chromium, tungsten, molybdenum, cerium, niobium, manganese and copper on a support comprising one or more oxides of metals taken from the group of aluminum, silicon and titanium with the associated benefit of said materials being active in the catalytic oxidation of carbon monoxide and/or carbonyl sulfide.

The following reactions proceed on the catalyst surface and to some extent in the gas phase, i.e. without catalyst.

| | | | |
|---|---|---|---|
| 1) | H₂S + 1.5 O₂ | → SO₂ + H₂O | + 124 kcal/mol |
| 2) | CS₂ + 1.5 O₂ | → COS + SO₂ | + 132 kcal/mol |
| 3) | COS + 1.0 O₂ | → SO₂ + CO | + 64 kcal/mol |
| 4) | CO + 0.5 O₂ | → CO₂ | + 68 kcal/mol |

In the gas phase CS₂ alone will start reacting via reaction 2, when the temperature is around 200 °C and H₂S will start reacting via reaction 1 at around 350°C. However, the gas phase oxidation of CS₂ (via reaction 2) is inhibited by the presence of H₂S, which means that CS₂ is oxidized at a much higher temperature than the stated 200°C if H₂S is present. Reaction 3 and 4 will not react in the gas phase at temperatures below 400°C.

The heat released from each of the reactions 1-4 increase the temperature of catalyst and gas. If the calorific value of the gas is too high (i.e. too high concentration of especially H₂S or CS₂), the temperature will increase above the maximum allowable catalyst temperature and thus damage the catalyst. In that case, thermal oxidation must be applied.

For each of the above reactions there is a minimum catalyst temperature, below which the reaction will not proceed. These so-called ignition temperatures for the catalyst/reaction combinations are found in Table 1 for the Pt promoted catalyst used according to the prior art and for the catalysts used in the new catalyst system.

**Table 1. Minimum ignition temperatures for oxidation catalysts used for oxidation of H₂S, CS₂, COS and CO. The metal oxide oxidation catalyst is not able to oxidise COS and CO. Below 320 °C the noble metal promoted oxidation catalyst is not active for CS₂,COS and CO oxidation.**

| | Pt promoted oxidation catalyst | Metal oxide oxidation catalyst, comprising one or more of V, Cr, W, Mo, Nb, Ce, Mn, Cu | Pd promoted oxidation catalyst |
|---|---|---|---|
| Minimum temperature for H₂S oxidation | 280°C | 200°C | (200°C) |
| Minimum temperature for COS/CS₂ oxidation | 360°C | - | 320°C |
| Minimum outlet temperature to ensure complete CO oxidation | 420°C | - | 320°C |
| Optimal inlet catalyst temperature for SO₂ conversion | 400-440°C | | |

The heat released by reaction 1 and to some extent reaction 2 can be used to increase the catalyst temperature, such that the minimum temperature for e.g. COS oxidation (360°C) can be met for the Pt based catalyst, even if the temperature at the inlet to the catalyst is below that temperature. If the H₂S concentration is sufficiently high, the heat released by reaction 1 will increase the gas and catalyst temperature above the minimum ignition temperature for COS oxidation and reaction 2 and 3 could increase the temperature to above 420°C, which again ensures complete oxidation of CO.

The present disclosure relates to a catalyst system, which utilizes the heat of reaction to ensure complete oxidation of H₂S and CS₂ at the lowest catalyst cost and at the lowest operating temperature, thus reducing the cost for preheating the lean H₂S and CS₂ gas.

### Figures

Fig.1 illustrates the temperature profile of catalyst and process gas assuming that reactions 1-4 proceed sequentially, together with relevant ignition temperatures.
Fig.2 illustrates a sequential catalyst system in a process for oxidation of lean waste gas.
Fig.3 illustrates a process for oxidation of lean waste gas and subsequent hydration and condensation into sulfuric acid, employing the disclosed catalyst system.
Fig.4 illustrates a process according to the prior art, for oxidation of lean waste gas and subsequent hydration and condensation into sulfuric acid employing a single oxidation catalyst.

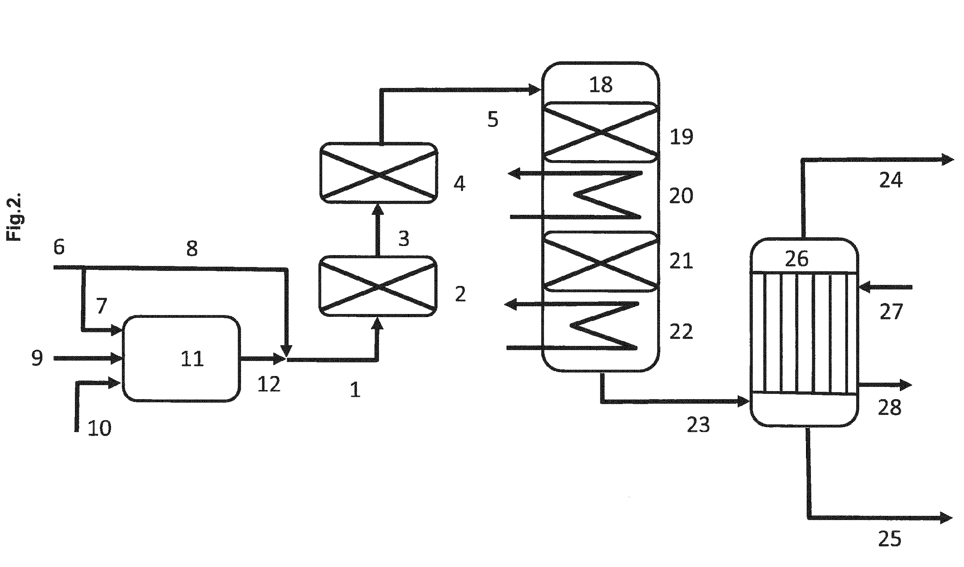

The disclosed catalyst system is shown in Fig.2. The lean H₂S and CS₂ process gas (1) is preheated to minimum 200°C and fed to a first metal oxide oxidation catalyst (2) such that oxidation of H₂S according to reaction 1 and to some extent CS₂ according to reaction 2 takes place. The process gas (3) leaving the metal oxide oxidation catalyst (2) must be above 320°C before entering the noble metal promoted catalyst (4), for reactions 2, 3 and 4 to proceed to completion. The process gas (5) leaving the noble metal promoted catalyst (4) contains SO₂, CO₂ and H₂O products and must be treated further before emitted to the atmosphere, e.g. in a sulfuric acid plant or a scrubber.

The main advantage of this catalyst system is that a relatively inexpensive metal oxide oxidation catalyst, being very active in H₂S oxidation, can be used to increase the temperature of the catalyst and process gas to minimum 320°C. At that temperature the more expensive noble metal promoted catalyst, very active in CS₂, COS, CO and H₂S oxidation can carry out the remaining oxidation. This means that the expensive noble metal promoted catalyst is only used where it is necessary and not for the H₂S oxidation where a less expensive metal oxide oxidation catalyst can catalyze the oxidation. Contrary to this, when using only a Pt-promoted catalyst according to the process of the prior art, expensive Pt is used for oxidation of H₂S, where a less expensive catalyst formulation is used according to the present disclosure.

Furthermore, the metal oxide oxidation catalyst is active at a much lower temperature than the Pt promoted catalyst, i.e. the energy required to heat up a cold lean H₂S and CS₂ gas is reduced and thus lower operating cost is achieved.

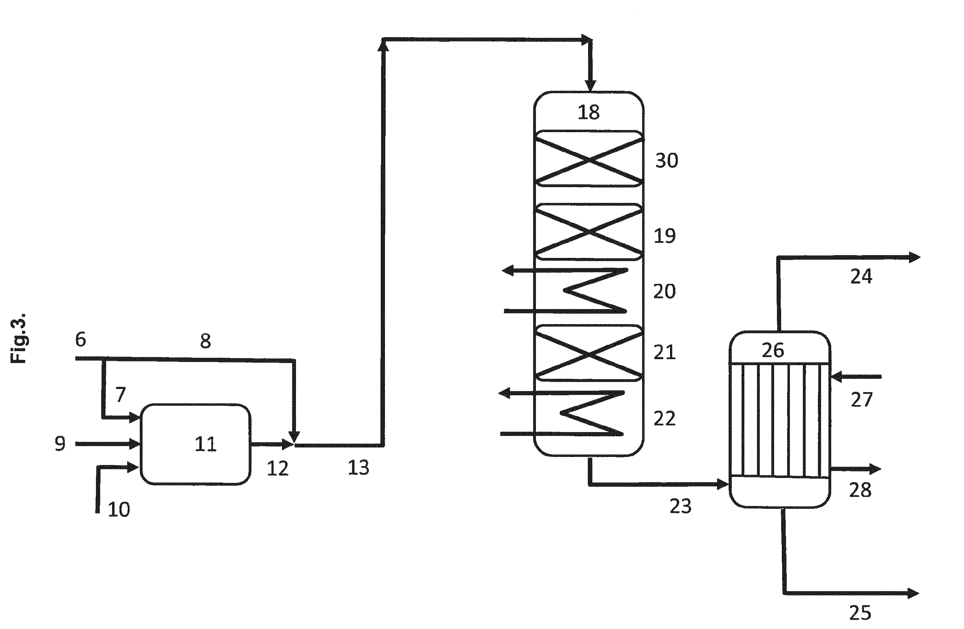

In a preferred process layout, the disclosed catalyst system is used for treatment of a lean H₂S and CS₂ gas from viscose production, producing sulfuric acid. The process layout is shown in Fig.3.

Cold lean H₂S and CS₂ gas (6) is received from a viscose producing plant. A fraction of the lean H₂S and CS₂ gas (7) is directed to combustor (11), in which elemental sulfur (9) and natural gas (10) is combusted at minimum 850°C. The hot process gas (12) leaving the combustor (11) is mixed with the cold lean H₂S and CS₂ gas (8), which has bypassed the combustor. The mixed process gas stream (1) is directed to the metal oxide oxidation catalyst (2), on which H₂S and to some extent CS₂ (via reaction (2)) is oxidized. The partly oxidized process gas (3) is then directed to the noble metal promoted catalyst (4), over which the unreacted CS₂, COS and CO is oxidized to CO₂ and SO₂. The oxidized process gas (5) leaving the noble metal promoted catalyst (4) is directed to a SO₂ reactor (18), in which an SO₂ oxidation catalyst (19+21) is installed to convert SO₂ to SO₃. To control the temperature of the second catalyst (21), a heat exchanger (20) is installed. The converted process gas is further cooled in heat exchanger (22) before leaving the SO₂ reactor (18) via line (23). In a special sulfuric acid condenser (26), the process gas is cooled and concentrated sulfuric acid is condensed and withdrawn from the bottom (25) and the cooled clean process gas leaves in the top via line (24) and is emitted via the stack. The cooling medium is atmospheric air, which enters at the top (27) and leaves at the bottom (28) of the condenser (26).

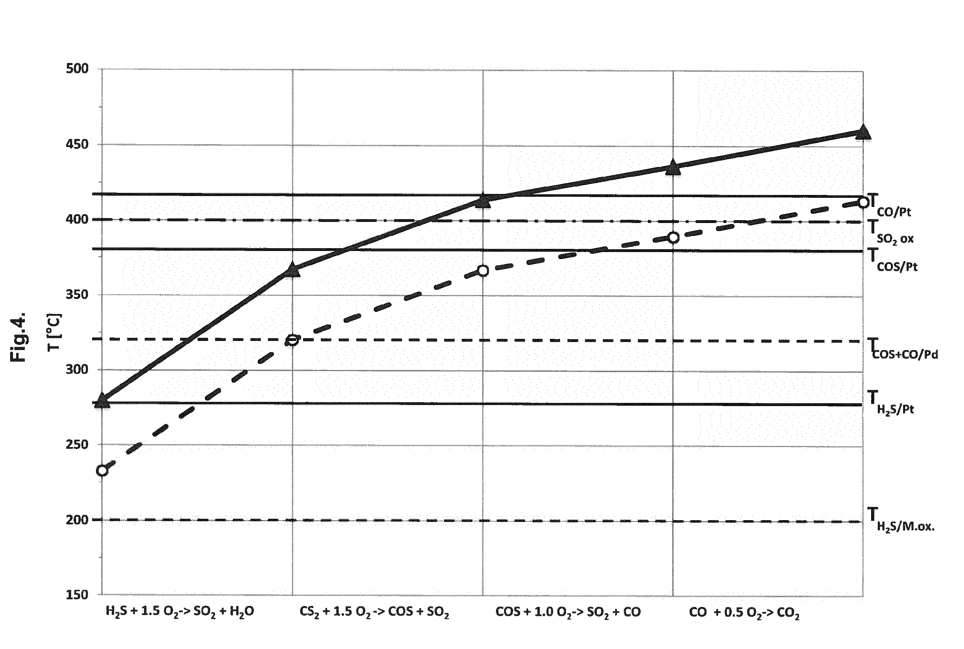

For comparison a process according to the prior art is illustrated in Fig.4. Here the two beds (14, 16) of catalytically active material for oxidizing H2S, CS₂, COS and CO are replaced by a single bed of catalytically active material (30), such as a Pt promoted catalyst, which requires a higher inlet temperature, as well as cooling of the outlet gas.

### Example 1

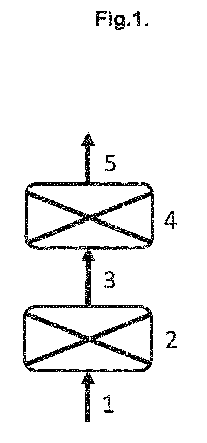

The temperature increase of process gas and catalyst(s) are shown in Fig.1 for a process gas with an initial concentration of 0.60 vol% H₂S and 0.30 vol% CS₂.

The dashed line (o) presents the disclosed catalyst system with a metal oxide oxidation catalyst to oxidize H₂S and a palladium promoted catalyst for the oxidation of CS₂, COS and CO. The solid line (Δ) presents the Pt promoted catalyst according to the prior art for carrying out all the chemical reactions.

The horizontal lines correspond to ignition temperatures as shown in Table 1 with e.g. T_{H2S/M.Ox} meaning the ignition temperature for H₂S over metal oxide.

With the disclosed catalyst system, reaction 1 (H₂S oxidation) is carried out over the metal oxide oxidation catalyst with 200°C ignition temperature. The inlet temperature is adjusted to 233°C such that the heat evolved during reaction 1 increases the temperature to 320°C, where the noble metal promoted catalyst for CS₂, COS and CO oxidation becomes active and via reaction 2,3 and 4 increases the temperature to 413°C out of the catalytic reactor.

Reaction 2 can to some extent proceed on the metal oxide oxidation catalyst and in the gas phase, but for process design purposes it is more conservative not to include a contribution to temperature increase on the metal oxide oxidation catalyst, based on the partial oxidation of CS₂ according to reaction 2.

With the Pt promoted catalyst according to the prior art it is necessary to increase the inlet temperature to 280°C for the H₂S oxidation to take place. After the H₂S oxidation, the temperature is sufficiently high for the CS₂, COS and CO oxidation to proceed. The resulting outlet temperature is 460°C well above the optimal temperature for the inlet to the SO₂ reactor in a downstream sulfuric acid plant.

### Example 2

In the production of viscose fibers, a so-called lean off gas is withdrawn from the production line. The lean off gas is atmospheric air with less than 2.5 vol% H₂S and CS₂, and typically less than 0.5 vol% of each. Since sulfuric acid is needed for the viscose/CS₂ production, this lean off gas is treated in a sulfuric acid plant. In the example described below, extra sulfuric acid production is desired and thus a stream of elemental sulfur is fed to the combustor of the sulfuric acid plant. To maintain a sufficiently high temperature in the combustor, a support fuel such as natural gas may also be added, and in other instances all support fuel may be natural gas or another fuel.

To save capital cost, a fraction of the lean off gas bypasses the combustor and added to the hot process gas leaving the combustor. This both reduces the size of the combustor and eliminates the need for cooling the process gas from the combustor to SO₂ oxidation temperatures in a waste heat boiler. Furthermore, much less support fuel is required by this process layout.

After mixing the hot process gas from the combustor with the cold bypassed lean gas, the combined process gas contains H₂S and CS₂, which must be oxidized to SO₂, CO₂ and H₂O before reaching the catalyst for conversion of SO₂ to SO₃. Catalytic oxidation is used for this purpose.

In Table 2, the difference between a Pt promoted manganese/copper oxide oxidation catalyst and the catalyst system combining a vanadium oxide based catalyst and a palladium promoted vanadium oxide based oxidation catalyst is shown. The ignition temperatures of the catalysts are as shown in Table 1, i.e. the catalyst operating temperatures must be above these temperatures to operate efficiently.

**Table 2. Operation of H₂S, CS₂, COS and CO oxidation catalysts for a process plant, treating a lean viscose off gas and elemental sulfur for further treatment in a wet type sulfuric acid plant.**

| | Pt-promoted oxidation catalyst | Combined catalyst system |
|---|---|---|
| **Feed streams** | | |
| | | |
| Temperature | 40°C | |
| H₂S concentration | 0.35 vol% | |
| CS₂ concentration | 0.32 vol% | |
| Balance | Atmospheric air | |
| | | |
| | | |
| Relative amount of natural gas flow | 100% | 86% |

| **Combustor** | | |
|---|---|---|
| Combustion temperature | 875°C | 875°C |
| Relative amount of lean viscose off gas to combustor | 100% | 90% |

| **Oxidation catalysts** | | |
|---|---|---|
| Temperature after mixing of hot process gas and cold viscose off gas | 327°C | 299°C |
| Temperature after H₂S oxidation | 360°C | 335°C |
| Temperature after H₂S and CS₂ oxidation (via reaction 2) | 393°C | 369°C |
| Temperature after complete oxidation via reactions 1-4 | 426°C | 403°C |
| Degree of oxidation | >99.9% | >99.9% |

In Table 2 it is seen that 14% less natural gas is required for the metal oxide and noble metal promoted catalyst combination, thereby reducing the operating cost. At the same time 10% less lean viscose off gas is directed to the combustor, reducing the size of the combustor and thus capital cost. In both cases complete oxidation is observed.

Processwise, a further advantage of the metal oxide/noble metal promoted catalyst system is that the temperature after complete oxidation can be kept at a temperature very close to the lower range of the optimum temperature for the SO₂ to SO₃ conversion catalyst. This allows for higher SO₂ conversion efficiency on this catalyst.

The metal oxide/noble metal promoted catalyst system will be a less expensive solution, since the initial oxidation is carried out on a catalyst without expensive noble metals and only the final oxidation is carried out with a noble metal promoted catalyst.

## Claims

1. A process for oxidation of a gas comprising at least 0.05 vol% hydrogen sulfide and at least 0.05 vol% of the sum of carbon monoxide, carbonyl sulfide and carbon disulfide, comprising the steps of
(a) directing said gas to contact, at a first temperature, a first material catalytically active in oxidation of hydrogen sulfide at said first temperature providing a heated and partially oxidized gas, and
(b) directing said partially oxidized gas to contact, at a second higher temperature, a second material catalytically active in oxidation of carbon monoxide, carbon disulfide and/or carbonyl sulfide providing an incinerated gas **characterized in** said first material being catalytically active in the oxidation of hydrogen sulfide at said first temperature, said second material being catalytically inactive in the oxidation of carbon monoxide, and/or carbonyl sulfide at said first temperature and said second material being catalytically active in the oxidation of carbon monoxide and/or carbonyl sulfide at said second temperature.

2. A process according to claim 1, in which said first temperature is between 200 and 320°C and preferably between 220 and 300°C.

3. A process according to claim 1 or 2, in which said second temperature is between 320 and 380°C preferably between 330 and 360°C.

4. A process according to claim 1, 2 or 3, in which the amount of hydrogen sulfide is sufficient for raising the temperature to said second temperature by the heat developed from the oxidation of hydrogen sulfide.

5. A process according to claim 1, 2, 3 or 4, in which said first catalytically active materials comprises one or more oxides of a metal taken from the group consisting of vanadium, chromium, tungsten, molybdenum, cerium, niobium, manganese and copper, on an support comprising one or more oxides of metals taken from the group of aluminum, silicon and titanium.

6. A process according to claim 1, 2, 3, 4 or 5, in which said second catalytically active material comprises a platinum group metal, preferably palladium, in combination with one or more oxides of a metal taken from the group consisting of vanadium, chromium, tungsten, molybdenum, cerium, niobium, manganese and copper, on a support comprising one or more oxides of metals taken from the group of aluminum, silicon and titanium.

7. A process according to claim 1, 2, 3, 4, 5 or 6, in which one or both of said first and second catalytically active material is provided as a monolith structure.

8. A process according to claim 1, 2, 3, 4, 5, 6 or 7, in which the total concentration of H₂S is less than 2.5 vol%.

9. A process according to claim 1, 2, 3, 4, 5, 6, 7 or 8, in which the following concentration condition is met c_{CS2} + 0.5 c_{COS} + 0.25 c_{CO} < 0.7 vol%

10. A process for production of sulfuric acid comprising the steps of one of claim 1, 2, 3, 4, 5, 6, 7, 8 or 9 and the further steps of
(c) directing said incinerated gas to contact a material catalytically active in oxidation of sulfur dioxide to sulfur trioxide providing an oxidized gas and
(d) at least partially hydrating sulfur trioxide forming sulfuric acid,
(e) withdrawing from said oxidized gas sulfuric acid.

11. A process according to claim 10 further comprising the step of condensing sulfuric acid in a cooled condenser.

12. A process according to claim 10 further comprising the step of absorbing sulfur trioxide in sulfuric acid.

13. A process plant configured for directing a gas to a catalyst system, **characterized in** said catalyst system comprising a material catalytically active in oxidation of hydrogen sulfide but substantially catalytically inactive in oxidation of carbonyl sulfide and carbon monoxide and a further material catalytically active in oxidation of carbonyl sulfide and carbon monoxide at a second higher temperature.

14. A process according to claim 13, in which said first catalytically active materials comprises one or more oxides of a metal taken from the group consisting of vanadium, chromium, tungsten, molybdenum, cerium, niobium, manganese and copper on a support comprising one or more oxides of metals taken from the group of aluminum, silicon and titanium.

15. A process according to claim 13 or 14, in which said second catalytically active material comprises a platinum group metal, preferably palladium in combination with one or more oxides of a metal taken from the group consisting of vanadium, chromium, tungsten, molybdenum, cerium, niobium, manganese and copper on a support comprising one or more oxides of metals taken from the group of aluminum, silicon and titanium.
